# EUROPEAN PATENT SPECIFICATION

(11) **EP 3 641 373 B1**
(45) Date of publication and mention of the grant of the patent: **15.09.2021**
(21) Application number: 18200676.7
(22) Date of filing: 16.10.2018
(51) Int. Cl.: H04W 16/10, H04W 72/08

(54) **SYSTEM AND METHOD FOR DETERMINING COMMUNICATION CHANNELS IN A WIRELESS NETWORK**
SYSTEM UND VERFAHREN ZUR BESTIMMUNG DER KOMMUNIKATIONSKANÄLE IN EINEM DRAHTLOSEN NETZWERK
SYSTÈME ET PROCÉDÉ DE DÉTERMINATION DE CANAUX DE COMMUNICATION DANS UN RÉSEAU SANS FIL

(43) Date of publication of application: 22.04.2020
(73) Proprietor: Advanced Digital Broadcast S.A., 1293 Bellevue (CH)
(72) Inventor: Skowronski, Zbigniew, 65-119 Zielona Gora (PL)
(74) Representative: Blonski, Pawel

(56) References cited:
- US-A1- 2006 292 988
- US-A1- 2015 215 950
- US-A1- 2015 305 040

## Description

### TECHNICAL FIELD

The present invention relates to an automatic channel selection (ACS) in a wireless network in particular, the present invention relates to ACS, which is more robust and resilient to strong transient interferences, avoiding impacts on user experience (e.g. disconnections) as much as possible.

### BACKGROUND OF THE INVENTION

Prior art defines wireless local area networks (WLAN) wherein a wireless client accesses the Internet from many locations by communicating with a wireless base station, typically referred to as access points (AP).

Various protocols have been developed to define standardized forms of wireless communication. As one example, the IEEE 802.11 standard defines an industry standard protocol that permits a WLAN to be configured. The WLAN includes one or more access points located at predetermined locations and are connected to servers and other types of network equipment through an associated distribution system.

Easy deployment of Wi-Fi networks results in their common existence, but the widespread creates performance problems. It is typical to find several dozen different and overlapping Wi-Fi networks in residential areas or office environments.

ACS provides a method to optimize wireless channel arrangement and assignment based on the current situation in the WLAN. ACS provides an optimal solution if it is configured on all APs in the WLAN. Triggering ACS on a single AP or on a subset of APs provides a useful but sub-optimal solution. Also, ACS only relies on the information observed at the time it is triggered. Once an AP has selected a channel, it remains operating on that channel until the user changes the channel or triggers ACS.

The ACS is used to automatically select the operating wireless channel for a given radio and implements actions aimed at choosing the operating channel that would most likely exhibit the best connectivity conditions for the client devices that the AP would serve. This process accounts for the possible presence in the selected portion of the spectrum (for example 2.4 or 5 GHz bands) of already established wireless networks and/or other sources of interferences (e.g., non-wireless networks and other radiating equipment).

A publication of US20150215950A1 discloses a method for selecting signal channel for a wireless networking device. The method collects WLAN and non-WLAN interference information on the candidate channels. The method then determines a weighted grade for each of the candidate channels based on the collected WLAN and non-WLAN interference information. A channel is selected among the candidate channels based on the weighted grades. The method further adjusts WLAN transmit parameter of the wireless networking device based on the collected WLAN and non-WLAN interference information.

Further, US20060292988A1 discloses a system and method for Access Point (AP) channel selection based upon a Channel Quality Index (CQI). The Channel Quality Index (CQI) is a value which quantifies a transmission quality of a channel. The transmission quality is evaluated based on a combination of different types of measured interference in the channel. In one embodiment the different types of measured interference include co-channel congestion, adjacent channel interference and in-band interference. The CQI is a value derived from the measurements, and for example may be a sum of all of the measurements. Each AP of the present invention determines the CQI of potential transmission channels, and selects a channel for use which has the 'best' CQI; for example if the CQI is a sum of all measured interferences, the 'best' AP is the one with the lowest CQI US20150305040A1 discloses Techniques for channel selection and related operations in a shared spectrum environment. In one example, a channel selector or the like may be used to select one of a number of available channels as an operating channel based on a comparison of cost functions for each of the available channels, with the cost functions being based on separate utility and penalty metrics. In another example, a channel scanner or the like may be used to trigger a channel scan in response to a channel quality metric indicating poor service for a threshold number or proportion of access terminals. In another example, an operating mode controller may be used to trigger a Time Division Multiplexing (TDM) mode on an operating channel in response to a utilization metric being above a threshold. The TDM mode may cycle operation between activated and deactivated periods in accordance with a TDM communication pattern.

A publication of US9992737B2, entitled "Automatic channel selection in wireless local area network (WLAN) controller based deployments" discloses that Wi-Fi channels are automatically selected in a WLAN controller based deployment. Scan results received from each of the plurality of access points comprise a list of neighboring access points from the plurality of access points relative to each access point. Responsive to a number of the plurality of access points exceeding a number of non-interfering channels, assigning each of the plurality of access points to a non-interfering channel with sharing of at least one of the non-interfering channels, using a GCA (Graph Coloring Algorithm) in which each color assignment corresponds to a non-interfering channel assignment in order to prevent neighboring access points from sharing a non-interfering channel. Lowest RSSI (Received Signal Strength Indication) measurements collected by access points can also be a factor in channel selection.

The aim of the development of the present invention is an improved system and method for automatic channel selection in a wireless network.

### SUMMARY AND OBJECTS OF THE PRESENT INVENTION

The invention is defined in the independent claims. Specific embodiments are defined in the dependent claims.

An object of the present invention is a method for an automatic channel selection (ACS) in a wireless network, as presented in the appended claims.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for automatic channel selection in a wireless network. Further details and features of the present invention, its nature and various advantages will become more apparent from the following detailed description of the preferred embodiments shown in a drawing, in which:
Fig. 1 presents a high-level diagram of a WLAN network;
Fig. 2 presents a band division into channels;
Fig. 3 presents a diagram of the method according to the present invention;
Fig. 4 presents an enhanced diagram of the method according to the present invention;
Figs. 5A-B show a diagram of an additional embodiment of the method according to the present invention;
Fig. 6 presents a diagram of the system according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

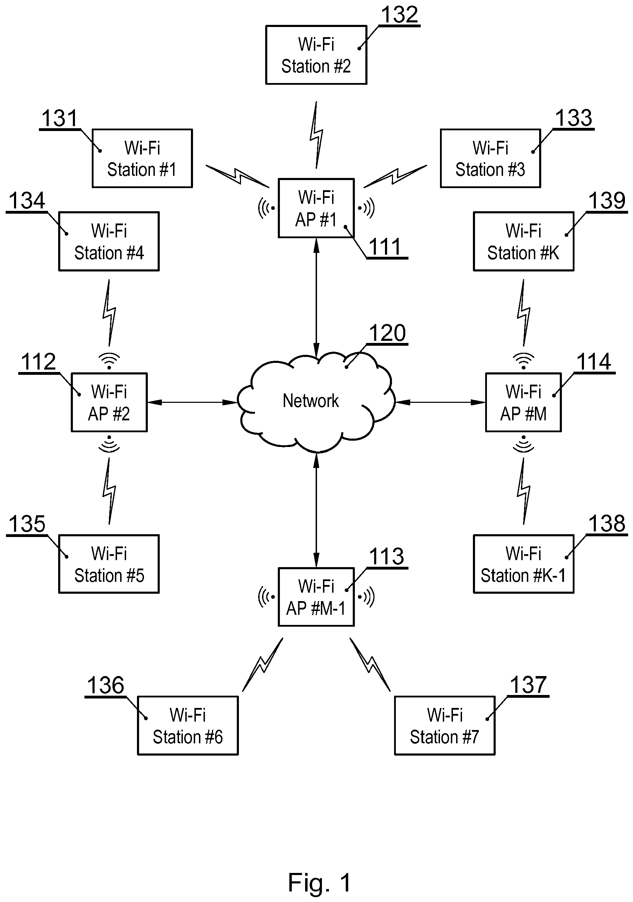

Fig. 1 presents a high-level diagram of a typical WLAN network. The WLAN network 120 can be a local area network, a wide area network, the Internet, a hybrid network or the like. The network 120 comprises a Wi-Fi portion operating under IEEE 802.11 or other standards.

The network 120 comprises at least one access point 111-114 selectively communicating with client devices (Wi-Fi stations) 131-139.

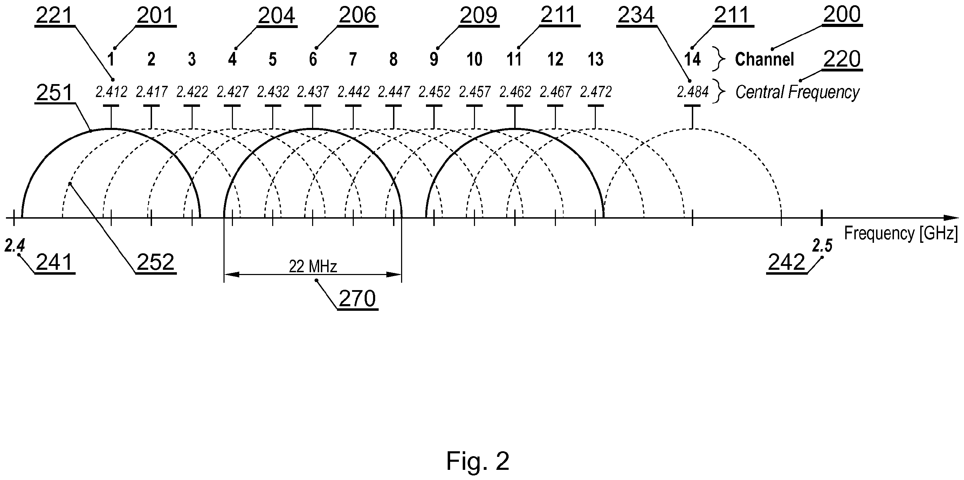

Fig. 2 presents a band 241-242 division into channels 200. In this case a frequency band between 2.4 and 2.5 GHz is split into 14 overlapping channels. Within this group there are also non-overlapping channels 201, 206, 211. Each channel, in this case, corresponds to 22 MHz bandwidth 270.

Clearly, the selected portion of the spectrum 241-242 may be different (2.4 or 5 GHz bands) as well as a channel bandwidth may be different, for example on the basis of current locale regulations (20, 40 or 80 MHz etc.). For example, 40 MHz channels are created by combining two 20 MHz adjacent channels thereby denominating the two channels as a primary and a secondary channel of the combined channel. It is also possible to bond four or even eight 20 MHz adjacent channels, obtaining 80 MHz and 160 MHz channels.

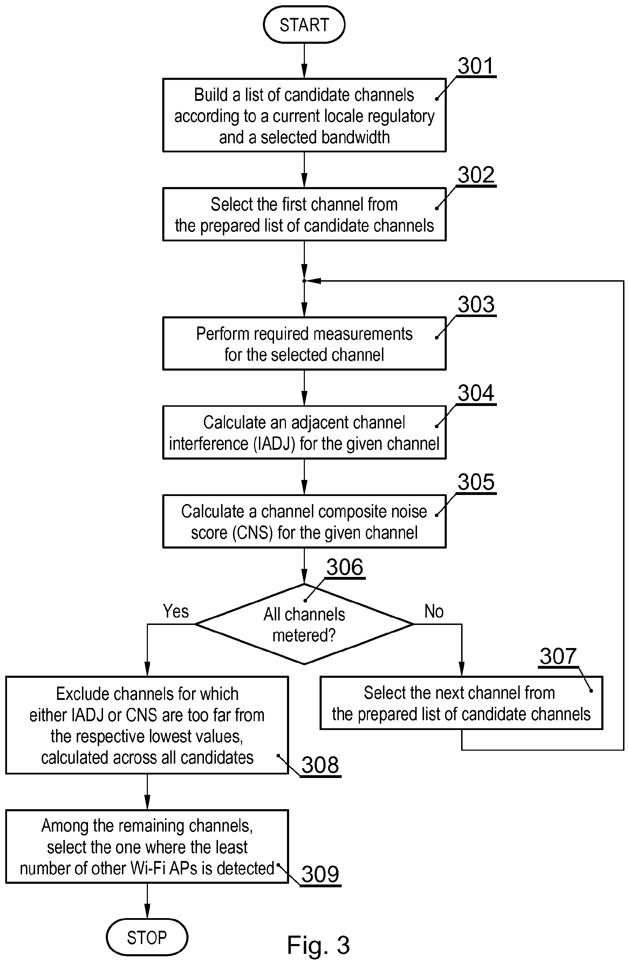

Fig. 3 presents a diagram of the method according to the present invention. The method presents an Initial Channel Selection starts from an access point invoking an ACS procedure, typically during booting up or just after it has been booted up. This is favorable, since there are not any client devices 131-139 connected to the AP.

At step 301 the AP builds a list of candidate channels on the basis of current locale regulatory and selected bandwidth (e.g. channel bandwidth 20, 40 or 80 MHz). When building said candidate channels list, BSS (Basic Service Set) coexistence rules may be applied, as specified by the 802.11 standard. Further, there may be excluded channels for which a background noise (a function of received energy not recognizable as associated to known wireless transmission technologies) exceeds a given threshold.

Next, at step 303, the AP performs measurements 303 for each channel 302 in the list, calculating:
- Adjacent channel interference 304 (IADJ, sum of interference measured on channels close to the candidate, each weighted by the relevant distance from the candidate channel). IADJ is interference caused by extraneous power from a signal in an adjacent channel e.g. may be caused by inadequate filtering, improper tuning or poor frequency control;
- Channel composite noise score (CNS) 305 which aggregates all noise contributions of the channel, including background noise and channel interference. For example a CNS is a sum of background noise and an equivalent noise indicator which is inversely proportional to the time the candidate channel is determined to be available for transmission by the AP, called "Tx opportunity" or TXOP).

This is a scan procedure executed for every channel 306, 307.

Subsequently, at step 308, the process excludes channels for which either IADJ or CNS are too far (by a selected threshold) from the respective lowest values, calculated across all candidate channels.

Lastly, at step 309, the AP selects 309, among the remaining channels, the channel where the least number of other Wi-Fi APs is detected.

After the first channel selection, the ACS process may be periodically repeated in order to ensure that a different channel is chosen if Wi-Fi environmental conditions change.

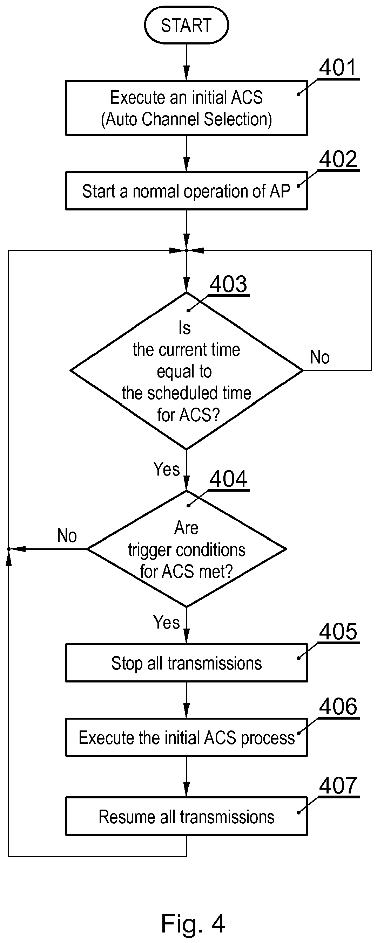

Fig. 4 presents an enhanced diagram of the method according to the present invention. After an initial ACS process 401 (Fig. 3) and a period of normal operation 402, the system verifies whether the scheduled time condition has been met 403, 404.

The ACS is preferably scheduled once per day 403 (other schedules may be tailored to users' needs), and is triggered if no client 131-139 is associated to the given AP or if the associated clients 131-139 have not been active for at least 10 seconds (or other preferred threshold time) prior to the time scheduled for the ACS procedure 404. This allows to greatly reduce the impact of an automatic channel scan on normal operation of the AP.

Periodic, automatic channel selection (ACS) preferably operates as follows: when the ACS is triggered, network transmissions are stopped 405; the ACS operates as in the initial channel selection 406 (Fig. 3); network transmissions are resumed 407.

This means that a short break in transmissions is needed to execute ACS, because the device must make measurements for each available communication channel.

It shall be noted that, prior to triggering the ACS process, updated information about Wi-Fi environment condition is not available (only measures for the operating channel are available). In order to obtain updated information about Wi-Fi environment, a scan is needed, resulting in disconnections for the clients.

This means that it is impossible to know in advance whether there is a better channel to switch to. Moreover, it is impossible not to generate disconnections if the ACS is triggered and it is decided to stay on the same channel, because of the scan needed to retrieve information about the Wi-Fi environment.

A second, enhanced embodiment of the present invention, is aimed at further improving ACS robustness to transient interferences. Transient interferences are defined as interferences affecting a channel for a short period of time, strong enough to make channel condition considerably worse, thus affecting customer experience. Configuration parameters for the enhanced ACS may be made exchanged using a TR-181 protocol.

The enhanced ACS uses information about the current operating channel, and thus does not need to break transmissions and disconnect clients 131-139 to collect them. Information about operating channel is constantly updated, preferably once every 5s.

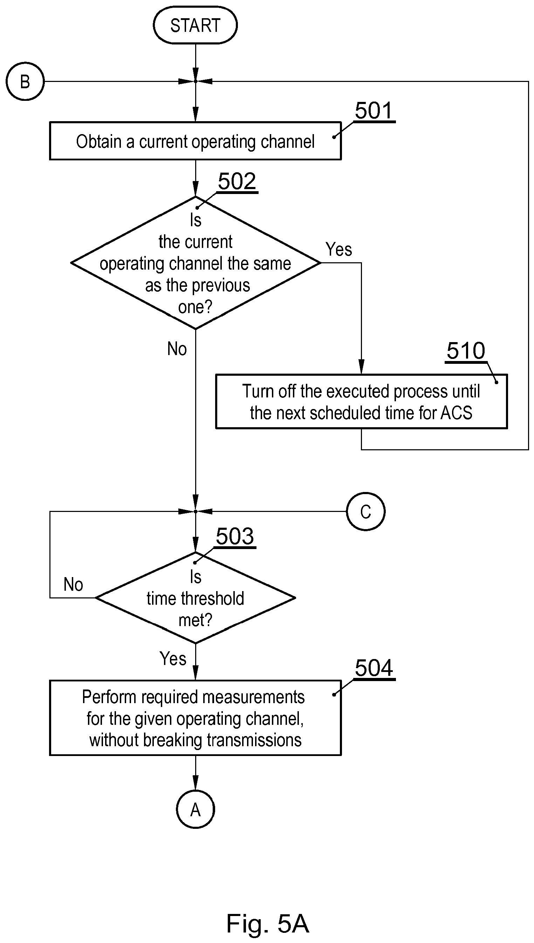

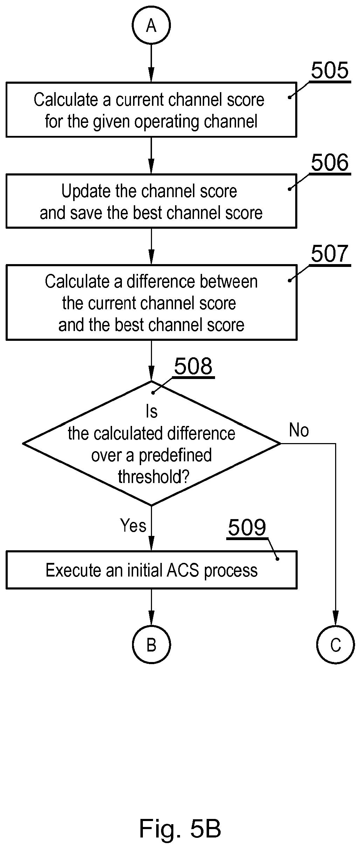

Figs. 5A-B show a diagram of an additional embodiment of the method according to the present invention.

During normal operation, enhanced ACS periodically 503 monitors the operating channel 501 conditions to identify 504 the onset of interferences. When interference condition is detected, the enhanced ACS triggers the automatic channel selection process presented in Fig. 3.

In order to identify the interference condition, the enhanced ACS uses a metric that combines the background noise with the time the channel is not available due to Wi-Fi or non-Wi-Fi interferences.

The enhanced ACS adds the following interference avoidance mechanism to the normal ACS operations: iteratively 503, e.g. every 5 seconds, the process performs a measurement 504 on the operating channel (see the aforementioned IADJ, CNS), without breaking transmissions; channel score, based on said measures, is updated 505, and the best score is saved 506; current channel score and best channel score are compared 507: if their difference is over a predefined threshold 508, meaning channel condition significantly worsened, the automatic channel selection process of Fig. 3 is triggered 509; as a measure to avoid an excessive number of enhanced ACS channel switches, if after an automatic channel selection process, the enhanced ACS chooses to stay on the same channel 510 (meaning all the other channels are interfered and the Wi-Fi environment is generally bad), the enhanced ACS is turned off until the next standard ACS period.

Please note that in order to avoid an excessive number of ACS triggers, due to bad Wi-Fi environmental conditions on all the channels, a "trigger" limiter may be implemented, allowing for a maximum number of ACS triggers (for example 3) in a given period, that is in a configurable number of hours (preferably set to 8).

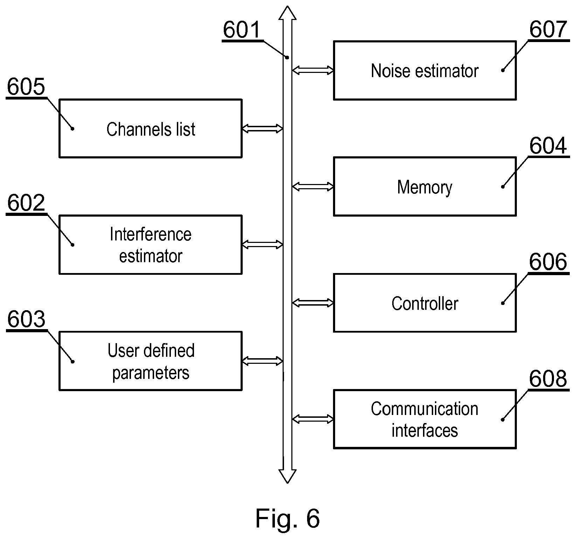

Fig. 6 presents a diagram of the system according to the present invention. The system may be realized using dedicated components or custom made FPGA or ASIC circuits. The system comprises a data bus 601 communicatively coupled to a memory 604. Additionally, other components of the system are communicatively coupled to the system bus 601 so that they may be managed by a controller 606.

The memory 604 may store computer program or programs executed by the controller 606 in order to execute steps of the method according to the present invention.

Module 605 is a channels list memory storing a list of candidate channels as specified in step 301. An interference estimator module 602 and a noise estimator module 607 are responsible for processing different physical measurements required to execute steps of the processes shown in Figs. 3 ― 5.

A module 603 stores user-defined parameters such as different threshold values, selection conditions as well as time-related conditions (such as 510).

Lastly, the AP device comprises appropriate communication interfaces (608) such as Wi-Fi.

The present invention improves automatic channel selection resulting in better channel usage and fewer disconnections in heavily occupied radio communication environments. Therefore, the invention provides a useful, concrete and tangible result.

As presented above, the present invention is applicable to radio (e.g. Wi-Fi) devices executing an automatic channel selection routine. Thus, the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for automatic channel selection in a wireless network may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for an automatic channel selection in a wireless network, the method comprising the steps of:
A) building (301) a list of available candidate communication channels;
B) performing (303) measurements for each candidate channel (302) in the list, by calculating:
∘ adjacent channel interference (304);
∘ channel composite noise score (305), which aggregates all noise contributions of the channel, including background noise and channel interference;
C) excluding (308) candidate channels, for which either the adjacent channel interference or the channel composite noise score are off by a selected threshold from the reference values;
the method being **characterised in that** it further comprises the steps of:
D) selecting (309), among the remaining candidate channels, the channel where the least number of other operating devices is detected,
E) iteratively (503) performing at least one measurement (504) on the operating channel, without breaking transmissions;
F) updating (505) a channel score, based on said measures, and storing the best score (506);
G) comparing (507) the current channel score and best channel score and if their difference is over a predefined threshold (508), executing the automatic channel selection according to steps A-D (509);
H) if after the automatic channel selection process, the same channel is chosen (510) preventing said iterative measurements (503);
I) whereas in order to avoid an excessive number of automatic channel selection triggers a trigger-limiter is applied allowing for a maximum number of triggers in a given period.

2. The method according to claim 1 wherein said adjacent channel interference (304) is a sum of interference measured on channels close to the candidate channel, each weighted by the relevant distance from the candidate channel.

3. The method according to claim 1 wherein said channel composite noise score (305) is a sum of background noise and an equivalent noise indicator which is inversely proportional to the time the candidate channel is determined to be available for transmission.

4. The method according to claim 1 wherein said reference values are calculated across all candidate channels.

5. The method according to claim 1 wherein after the first automatic channel selection, the process is periodically repeated in order to ensure that a different channel is chosen if environmental conditions change.

6. The method according to claim 5 wherein said periodic, automatic channel selection comprises the following steps:
• stopping network transmissions (405);
• executing (406) all steps of the method according to claim 1;
• resuming network transmissions (407).

7. The method according to claim 1 wherein during said building step (301) there are excluded channels for which a background noise exceeds a given threshold.

8. A computer program comprising program code means for performing all the steps of the computer-implemented method according to claim 1 when said program is run on a computer.

9. A computer readable medium storing computer-executable instructions performing all the steps of the computer-implemented method according to claim 1 when executed on a computer.

10. A system for an automatic channel selection in a wireless network, the system comprising:
• a communication interface (608) with said wireless network;
• a data bus (601) communicatively coupled to a memory (604);
• a controller 606;
• a channels list memory module (605) configured to store a list of candidate channels;
• an interference estimator module (602) and a noise estimator module (607) configured to process physical signal measurements;
• wherein said controller is configured to executed all steps of the method according to claim 1.

## Patentansprüche

1. Verfahren für eine automatische Kanalauswahl in einem drahtlosen Netzwerk, wobei das Verfahren die Schritte umfasst:
A) Erstellen (301) einer Liste verfügbarer Kandidaten-Kommunikationskanäle;
B) Durchführen (303) von Messungen für jeden Kandidatenkanal (302) in der Liste durch Berechnen:
∘ der Nachbarkanalstörung (304);
∘ der zusammengesetzten Kanalrauschbewertung (305), die alle Rauschbeiträge des Kanals, einschließlich Hintergrundrauschen und Kanalstörung, sammelt;
C) Ausschließen (308) von Kandidatenkanälen, für die entweder die Nachbarkanalstörung oder die zusammengesetzte Kanalrauschbewertung um einen ausgewählten Schwellenwert von den Referenzwerten abweicht;
wobei das Verfahren **dadurch gekennzeichnet ist, dass** es ferner die Schritte umfasst:
D) Auswählen (309), unter den verbleibenden Kandidatenkanälen, des Kanals, bei dem die geringste Anzahl anderer Betriebsgeräte erkannt wird,
E) iterativ (503) Durchführen von mindestens einer Messung (504) auf dem Betriebskanal, ohne Übertragungen zu unterbrechen;
F) Aktualisieren (505) einer Kanalbewertung basierend auf den Messungen und Speichern der besten Bewertung (506);
G) Vergleichen (507) der aktuellen Kanalbewertung und der besten Kanalbewertung, und wenn ihre Differenz über einem vordefinierten Schwellenwert (508) liegt, Ausführen der automatischen Kanalauswahl gemäß den Schritten A bis D (509);
H) wenn nach dem automatischen Kanalauswahlprozess derselbe Kanal gewählt wird (510), Verhindern der iterativen Messungen (503);
I) wohingegen, um eine übermäßige Anzahl von Triggern für die automatische Kanalauswahl zu vermeiden, ein Trigger-Begrenzer angewendet wird, der eine maximale Anzahl von Triggern in einem bestimmten Zeitraum ermöglicht.

2. Verfahren nach Anspruch 1, wobei die Nachbarkanalstörung (304) eine Summe von Störungen ist, die auf Kanälen in der Nähe des Kandidatenkanals gemessen werden, wobei jede mit der relevanten Entfernung vom Kandidatenkanal gewichtet wird.

3. Verfahren nach Anspruch 1, wobei die zusammengesetzte Kanalrauschbewertung (305) eine Summe von Hintergrundrauschen und einem äquivalenten Rauschindikator ist, der umgekehrt proportional zu der Zeit ist, zu der bestimmt wird, dass der Kandidatenkanal für die

4. Verfahren nach Anspruch 1, wobei die Referenzwerte über alle Kandidatenkanäle berechnet werden.

5. Verfahren nach Anspruch 1, wobei nach der ersten automatischen Kanalauswahl der Prozess periodisch wiederholt wird, um sicherzustellen, dass ein anderer Kanal gewählt wird, wenn sich die Umgebungsbedingungen ändern.

6. Verfahren nach Anspruch 5, wobei die periodische, automatische Kanalauswahl die folgenden Schritte umfasst:
• Stoppen von Netzwerkübertragungen (405);
• Ausführen (406) aller Schritte des Verfahrens nach Anspruch 1;
• Wiederaufnahme von Netzwerkübertragungen (407).

7. Verfahren nach Anspruch 1, wobei während des Aufbauschritts (301) ausgeschlossene Kanäle vorhanden sind, für die ein Hintergrundrauschen einen gegebenen Schwellenwert überschreitet.

8. Computerprogramm, das Programmcodemittel zum Durchführen aller Schritte des computerimplementierten Verfahrens nach Anspruch 1 umfasst, wenn das Programm auf einem Computer läuft.

9. Computerlesbares Medium, das computerausführbare Anweisungen speichert, die alle Schritte des computerimplementierten Verfahrens nach Anspruch 1 durchführen, wenn sie auf einem Computer ausgeführt werden.

10. System für eine automatische Kanalauswahl in einem drahtlosen Netzwerk, wobei das System umfasst:
• eine Kommunikationsschnittstelle (608) mit dem drahtlosen Netzwerk;
• einen Datenbus (601), der kommunikativ mit einem Speicher (604) gekoppelt ist;
• eine Steuerung 606;
• ein Kanallistenspeichermodul (605), das konfiguriert ist, um eine Liste von Kandidatenkanälen zu speichern;
• ein Störungsschätzermodul (602) und ein Rauschschätzermodul (607), die konfiguriert sind, um physikalische Signalmessungen zu verarbeiten;
• wobei die Steuerung konfiguriert ist, um alle Schritte des Verfahrens nach Anspruch 1 auszuführen.

## Revendications

1. Procédé de sélection automatique de canal dans un réseau sans fil, le procédé comprenant les étapes de :
A) établissement (301) d'une liste de canaux de communication candidats disponibles ;
B) réalisation (303) de mesures pour chaque canal candidat (302) figurant dans la liste, en calculant :
∘ des interférences entre canaux adjacents (304) ;
∘ un score de bruit composite de canal (305), qui agrège toutes les contributions de bruit du canal, y compris le bruit de fond et les interférences entre canaux ;
C) exclusion (308) des canaux candidats, pour lesquels soit les interférences entre canaux adjacents soit le score de bruit composite de canal sont décalés d'un seuil sélectionné à partir des valeurs de référence ;
le procédé étant **caractérisé en ce qu'**il comprend en outre les étapes de :
D) sélection (309), parmi les canaux candidats restants, du canal où le plus petit nombre d'autres dispositifs opérationnels est détecté,
E) réalisation de manière itérative (503) d'au moins une mesure (504) sur le canal opérationnel, sans interrompre les transmissions ;
F) mise à jour (505) d'un score de canal, sur la base desdites mesures, et stockage du meilleur score (506) ;
G) comparaison (507) du score de canal courant et du meilleur score de canal et si leur différence dépasse un seuil prédéfini (508), exécution de la sélection automatique de canal selon les étapes A à D (509) ;
H) si après le procédé de sélection automatique de canal, le même canal est choisi (510), empêchement desdites mesures itératives (503) ;
I) alors que pour éviter un nombre excessif de déclenchements de sélection automatique de canal, un limiteur de déclenchement est appliqué qui autorise un nombre maximal de déclenchements dans une période donnée.

2. Procédé selon la revendication 1, lesdites interférences entre canaux adjacents (304) étant une somme d'interférences mesurées sur des canaux proches du canal candidat, chacune étant pondérée par la distance pertinente par rapport au canal candidat.

3. Procédé selon la revendication 1, ledit score de bruit composite de canal (305) étant une somme de bruits de fond et d'un indicateur de bruit équivalent qui est inversement proportionnel au temps pendant lequel il est déterminé que le canal candidat est disponible pour la transmission.

4. Procédé selon la revendication 1, lesdites valeurs de référence étant calculées sur tous les canaux candidats.

5. Procédé selon la revendication 1, après la première sélection automatique de canal, ledit procédé étant répété périodiquement afin de garantir qu'un canal différent soit choisi si les conditions environnementales changent.

6. Procédé selon la revendication 5, ladite sélection de canal automatique périodique comprend les étapes suivantes :
• arrêt des transmissions réseau (405) ;
• exécution (406) de toutes les étapes du procédé selon la revendication 1 ;
• reprise des transmissions réseau (407).

7. Procédé selon la revendication 1, pendant ladite étape d'établissement (301) il existe des canaux exclus pour lesquels un bruit de fond dépasse un seuil donné.

8. Programme informatique comprenant un moyen de code de programme permettant d'effectuer toutes les étapes du procédé implémenté par ordinateur selon la revendication 1 lorsque ledit programme est lancé sur un ordinateur.

9. Support lisible par ordinateur stockant des instructions exécutables par ordinateur effectuant toutes les étapes du procédé implémenté par ordinateur selon la revendication 1 lorsqu'elles sont exécutées sur un ordinateur.

10. Système permettant une sélection automatique de canal dans un réseau sans fil, le système comprenant :
• une interface de communication (608) avec ledit réseau sans fil ;
• un bus de données (601) couplé en communication à une mémoire (604) ;
• un dispositif de commande 606 ;
• un module de mémoire de liste de canaux (605) configuré pour stocker une liste de canaux candidats ;
• un module estimateur d'interférences (602) et un module estimateur de bruits (607) configurés pour traiter des mesures de signaux physiques ;
• ledit dispositif de commande étant configuré pour exécuter toutes les étapes du procédé selon la revendication 1.
